# EUROPÄISCHE PATENTANMELDUNG

(11) **EP 3 909 729 A1**
(43) Veröffentlichungstag der Anmeldung: **17.11.2021**
(21) Anmeldenummer: 21171225.2
(22) Anmeldetag: 29.04.2021
(51) Int. Cl.: B26D 5/00, A22C 17/00, B26D 7/30, B26D 1/14, B26D 1/25, B26D 7/06

(54) **GEWICHTS-VARIATIONS-VERFAHREN SOWIE AUFSCHNEIDEMASCHINE FÜR DESSEN DURCHFÜHRUNG**

(30) Priorität: 12.05.2020 DE 102020112864
(71) Anmelder: TVI Entwicklung und Produktion GmbH, 83737 Irschenberg (DE)
(72) Erfinder: Völkl, Thomas, 83052 Bruckmühl (DE); Mayr, Martin, 83549 Eiselfing (DE)
(74) Vertreter: Weickmann & Weickmann PartmbB

(57) **Zusammenfassung**

Um beim Aufschneiden eines Laibes (L) in Scheiben (S) einerseits das geforderte Durchschnittsgewicht der gesamten Charge einzuhalten und dennoch ein Untergewicht einzelner Scheiben (S) zu vermeiden, werden für die je nach grundsätzlicher Form des Laibes kritischen Bereiche, meist die beiden Enden, andere Bezugsgewichte (Gbezug) gewählt als für den restlichen Bereich.

## Beschreibung

### I. Anwendungsgebiet

Die Erfindung betrifft das Verbessern der Gewichtgenauigkeit beim Herstellen von möglichst gewichtsgenauen Scheiben oder Portionen aus mehreren Scheiben durch Abschneiden der Scheiben von einem meist länglichen Lebensmittel-Laib, dessen Querschnitt sich jedoch im Ursprungszustand entlang der Länge mehr oder weniger stark ändert, insbesondere einem Fleisch-Laib aus Frischfleisch eines Rindes oder Schweines.

### II. Technischer Hintergrund

Bei der Herstellung gewichtsgenauer Scheiben und dem anschließenden Abpacken mit auf der Packung angegebenen Nenn-Gewicht (= "Fest-Verpackung") von
- einzelnen Scheiben (Einzelscheiben-Portion) ist für den Hersteller jedes Übergewicht jeder Scheibe ein Verlustfaktor, während
- bei gewichtsgenauen Mehrscheiben-Portionen unter Angabe eines vorgegebenen Nenn-Gewichtes einzelne Scheiben mit Untergewicht einerseits und Übergewicht andererseits ausgleichend zu einer gewichtsgenauen Portion kombiniert werden können und nur das anteilsmäßig in der Regel dann sehr viel geringere Übergewicht der gesamten Mehrscheiben-Portion einen Verlustfaktor darstellt.

Um das Gewicht der abzutrennenden Scheiben steuern zu können, wird der Laib meist durch Verpressen in Längsrichtung und gegebenenfalls auch in Querrichtung, meist in einem stirnseitig vorne und hinten offenen, jedoch umfänglich geschlossenen, sogenannten Formrohr, auf einen über die Länge möglichst gleichbleibenden Querschnitt gebracht.

Dann wird der verpresste Laib mittels des Längspressstempels aus der gegenüberliegenden offenen Stirnseite, dem Schneidende, des Formrohres um eine definierte Vorschubstrecke, also einen Überstand, vorwärts geschoben, meist bis zur Anlage mit Druck an einer Anschlagplatte, und unmittelbar an der vorderen Stirnseite des Formrohres mittels eines Messers eine Scheibe abgetrennt. Die Axialposition des Messers zum Formrohr und dessen vorderer Stirnseite bleibt in der Regel immer unverändert.

Dabei ist klarzustellen, dass die an der Maschine automatisch für jede Scheibe eingestellte Vorschubstrecke, die sogenannte Dickeneinstellung, meist etwas größer ist als der eingestellte Abstand zwischen der Anschlagplatte und der Axialposition des Messers, da sich das vorne aus dem Formrohr überstehende Stück des Laibes seitlich ausdehnt und der sich ergebende Überstand des vorgeschobenen Laibes aus dem Formrohr kürzer wird. Die tatsächliche Scheibendicke, die die Scheibe nach deren Abtrennen, also nachdem sie sich frei ausdehnen kann, besitzt, ist meist etwas größer als der eingestellte Abstand und etwas kleiner als die Dickeneinstellung.

Für die Zwecke der vorliegenden Erfindung wird von einer festen Korrelation zwischen Gewicht und Dicke sowohl der Scheibe als auch des gesamten Laibes ausgegangen, und somit Gewicht und Dicke einer Scheibe quasi gleichgesetzt, also beispielsweise Korrektur-Gewicht und Korrektur-Dicke quasi synonym verwendet, und deshalb auch allgemein als Korrektur-Wert bezeichnet.

Vor dem Aufschneiden eines Laibes wird das Gesamtvolumen und damit das Gesamtgewicht des darin - bei geschlossenem Schneidende - verpressten Laibes automatisch in etwa bestimmt durch Detektion der Position von Längs-Pressstempel und ggfs. Quer-Pressstempel relativ zum Formrohr - insbesondere durch Bestimmen der Ausfahrlänge des jeweiligen Stempels aus einem ArbeitsZylinder - während an den Pressstempeln eine definierte Kraft, die Messkraft, anliegt. Dabei entspricht die Messkraft vorzugsweise der Vorschub-Kraft, mit der der Laib für das Abtrennen von Scheiben mittels des Längs-Pressstempel später schrittweise nach vorne aus dem Formrohr geschoben wird.

Aus dem Gesamtvolumen des Laibes und dem Querschnitt des Formrohres im verpressten Zustand kann automatisch die Soll-Dicke berechnet werden, die alle Scheiben dieses Laibes haben müssten, um - insbesondere ohne Reste in Form von untergewichtigen Scheiben - nur Scheiben zu erzeugen, deren Gewicht mindestens einem vorgegebenen Soll-Gewicht, beispielsweise dem auf dem Etikett der einzelnen abgepackten Scheibe angegebenen Nenn-Gewicht oder einem Bezugs-Gewicht, welches etwas höher als das Nenn-Gewicht sein kann, und welches sich der Hersteller der Packungen selbst intern vorgibt, entspricht.

Es gibt jedoch eine Reihe von Gründen, warum trotz Einstellung der Längsposition des Messers auf eine solche Position, die der Soll-Dicke einer Scheibe des verpressten Laibes entspricht, dennoch die Scheiben nicht das Soll-Gewicht besitzen, insbesondere ihr Gewicht außerhalb eines Toleranzbereiches liegt, insbesondere unterhalb einer Toleranz-Untergrenze dieses Toleranzbereiches.

Solche Scheiben mit einem (Scheiben-) Unter-Gewicht unterhalb der Toleranz-Untergrenze sind bei der Herstellung gewichtsgenauer Einzelscheiben-Portionen Ausschuss und müssen anderweitig verwertet werden und besitzen deshalb einen geringeren Wert.

Bei der Herstellung gewichtsgenauer Mehrscheiben-Portionen können Scheiben, deren Gewicht unter dem Sollgewicht, insbesondere unterhalb der Toleranz-Untergrenze, liegt, zumindest teilweise zum Kombinieren mit übergewichtigen einzelnen Scheiben innerhalb der Portion verwendet werden.

Erfindungsgemäß im Vordergrund steht jedoch die Herstellung gewichtsgenauer Einzelscheiben-Portionen, also von Scheiben, von denen jede einzelne auf oder über, aber möglichst nah am, gewählten Sollgewicht, insbesondere einem vom Hersteller der Scheiben intern festgelegten Bezugsgewicht, liegt, insbesondere innerhalb eines existierenden Toleranzbereiches liegt, zumindest oberhalb einer Toleranz-Untergrenze liegt, somit die Vermeidung von Ausschuss-Scheiben.

Häufig gelten folgende externe, meist gesetzliche, Bedingungen beim Verkauf von Portionen mit einem angegebenen Nenn-Gewicht, auf dessen Basis - und nicht auf Basis des Ist-Gewichtes - der auf der Packung angegebene Preis ermittelt ist und häufig auch der Hersteller der Packungen mit den Portionen darin entlohnt wird:

### 1. Bedingung:

Der Durchschnitt des Ist-Gewichts aller produzierten Portionen einer Charge mit gleichem angegebenen Nenn-Gewicht muss über dem Nenn-Gewicht liegen.

Bei sehr großen Chargen, deren Aufschneiden mehr als einen Arbeitstag benötigt, kann dies auch zusätzlich für die an jedem einzelnen Arbeitstag aufgeschnittenen Teil-Chargen gelten.

### 2. Bedingung:

Das Ist-Gewicht jeder einzelnen Portion, also bei Einzelscheiben-Portionen jeder einzelnen Scheibe, muss oberhalb einer externen, meist gesetzlichen Toleranz-Untergrenze TU liegen, die beispielsweise bei einem Nenn-Gewicht zwischen 500 g und 1000 g um 15 g unter dem Nenn-Gewicht liegt.

Ist die 2. Bedingung verletzt, ist die entsprechende Portion Ausschuss, ist dagegen die 1. Bedingung verletzt, ist die gesamte produzierte Charge Ausschuss.

Optional vorgegebene, Hersteller-interne Bedingung:

### Als 3. Bedingung

soll häufig und auch erfindungsgemäß die Erfüllung der 1. Bedingung auch für Teil-Chargen, insbesondere innerhalb jedes einzelnen Laibes, eingehalten werden.

Es soll also der Durchschnitt des Ist-Gewichts aller aus einem Laib produzierten Scheiben über dem Nenn-Gewicht liegen.

Dabei muss der einzelne Leib erfindungsgemäß nicht unbedingt auch noch restefrei aufgeschnitten werden, obwohl dies der Idealfall wäre.

### III. Darstellung der Erfindung

### a) Technische Aufgabe

Es ist daher die Aufgabe gemäß der Erfindung, ein Verfahren sowie eine Vorrichtung für das Aufschneiden von Laiben in gewichtsgenaue Scheiben zur Verfügung zu stellen, bei dem im Idealfall keine einzige Scheibe ein Ist-Gewicht außerhalb des Toleranz-Bereiches, insbesondere unter der Toleranz-Untergrenze, aufweist.

### b) Lösung der Aufgabe

Diese Aufgabe wird durch die Merkmale der Ansprüche 1 und 15 gelöst. Vorteilhafte Ausführungsformen ergeben sich aus den Unteransprüchen.

Diese Aufgabe kann beim Aufschneiden von insbesondere verpressten, also definiert geformten, Laiben - insbesondere aus dem beschriebenen umfänglich geschlossenen Formrohr heraus, welches einen konstanten Querschnitt entlang seiner Längserstreckung aufweist - durch die nachfolgend beschriebene Vorgehensweise gelöst werden, was eine entsprechend ausgebildete Aufschneidemaschine mit einer entsprechend ausgebildeten automatischen Steuerung voraussetzt.

Die Dickeneinstellungen für die Scheiben werden automatisch von der Steuerung der Maschine so berechnet und vorgegeben, dass das Gewicht der Scheiben die in die Steuerung eingegebenen Werte einhält.

Soweit nichts Anderes ausgesagt, wird im Folgenden davon ausgegangen, dass für das Aufschneiden als Bezugs-Gewicht das auf der späteren Packung angegebene Nenn-Gewicht und kein höheres, intern festgelegtes, Bezugs-Gewicht gewählt und in die Steuerung eingegeben wird.

Hinsichtlich der Vorgehensweise muss zunächst ermittelt werden, wie viele Scheiben mit mindestens Bezugs-Gewicht aus dem aufzuschneidenden Laib gewonnen werden können, wofür zunächst einmal Gesamt-Gewicht und/oder Gesamt-Volumen des Laibes ermittelt werden sollte, wobei wegen eines unterstellten immer gleichen spezifischen Gewichts - zumindest bei einer Charge von Fleischstücken - jeder dieser beiden Werte aus dem jeweils anderen Wert errechnet werden kann.

Hierfür könnte man den Laib vor dem Aufschneiden einfach wiegen und die maximal erzielbare Anzahl von Scheiben mit einem bestimmten Bezugs-Gewicht daraus errechnen.

Da ein solcher Laib jedoch im Ausgangszustand eine unregelmäßige Form besitzt, insbesondere entlang seiner Haupterstreckungsrichtung keinen konstanten Querschnitt besitzt, müsste man dann zusätzlich an jeder Stelle entlang des Laibes den Querschnitt kennen und die Dicke jeder Scheibe, die zum Erreichen des Bezugs-Gewichtes führt, neu bestimmen und einstellen.

Um dies zu vermeiden, wird der Laib meist in einem umfänglich geschlossenen Formrohr, dessen Formrohr-Hohlraum über die gesamte Länge einen konstanten Querschnitt besitzt, zumindest in Längsrichtung z.B. mittels eines Längspressstempels so verformt, dass der Laib den inneren Querschnitt des Formrohr-Hohlraumes möglichst an jeder Längsposition vollständig ausfüllt und zu einem gleichmäßigen Strang, also einem Kaliber, welches über seine Länge durchgehend den gleichen Querschnitt besitzt, verformt wird. In Kenntnis der Querschnittsfläche des Formrohr-Hohlraumes und damit des Stranges muss dann lediglich die Dicke der Scheibe festgelegt werden, um eine Scheibe mit einem vorgegebenen Gewicht, etwa dem Bezugs-Gewicht, zu erzielen.

Auch das Volumen des gesamten Laibes kann auf diese Art ermittelt werden, indem im verformten Zustand, wenn also der verformte Laib den Querschnitt des Formrohr-Hohlraumes bereits über die gesamte Länge des Laibes ausfüllt, lediglich noch die Länge des zu einem Strang verformten Laibes ermittelt werden muss. Dies ist durch Bestimmung der Position des Längs-Pressstempels und in Kenntnis der Position des gegenüberliegenden, meist direkt am Schneidende anliegenden, Anschlages beim Längsverpressen leicht und automatisch durchführbar.

Vorzugsweise unterliegt dabei der zum Strang verformte Laib einer Messkraft, welche beispielsweise am Längspressstempel anliegt, wobei es sich dabei vorzugsweise um die gleiche Kraft handelt, mit der später beim Aufschneiden der Laib zwischen dem Abtrennen der einzelnen Scheiben über das vordere Ende des Formrohres hinaus um eine definierte Strecke vorwärtsgeschoben und insbesondere gegen einen Anschlag gedrückt wird.

Das Ziel besteht primär darin, dass die einzelnen Scheiben einerseits kein Ausschuss auf Grund von Untergewicht werden und andererseits möglichst wenig Übergewicht z.B. gegenüber dem Bezugsgewicht haben sollen, um den nicht bezahlten sogenannten give away möglichst gering zu halten. Da hierbei der Laib nicht restefrei aufgeschnitten werden muss, kann eine untergewichtige Restscheibe pro Laib verbleiben, die dann anders verwertet werden kann.

Dabei muss aber die fast immer geltende erste Bedingung eingehalten werden, dass zusätzlich auch das Durchschnittsgewicht aller Scheiben z.B. einer Charge von Laiben über einer extern, sei es vom Auftraggeber oder vom Gesetzgeber, vorgegebenen Toleranz-Untergrenze, in der Regel dem Nenn-Gewicht, liegen muss, da sonst die gesamte Charge Ausschuss ist.

Somit wird der Hersteller alles tun, um dieses notwendige Durchschnitts-Gewicht aller Scheiben einzuhalten, und parallel dazu versuchen, dass möglichst wenige Scheiben ein Gewicht unter der externen Toleranz-Untergrenze besitzen, wodurch die einzelne Scheibe zu Ausschuss würde.

Letzteres ist zwar im Vergleich zum Ausschuss in Form einer ganzen Charge ein relativ kleiner Schaden, der sich aber dennoch summieren kann, wenn beispielsweise bei jedem Laib eine oder zwei Scheiben durch ein solches Untergewicht Ausschuss werden.

Dies ist jedoch ohne Gegenmaßnahmen relativ leicht möglich, da sich die oft birnenförmigen oder lachsförmigen Laibe vor allem in ihrem Anfangs- und Endbereich nicht optimal - zumindest nicht unter der Messkraft - an die Innenkontur des Formrohr-Hohlraumes anpassen und auch im verpressten Zustand Hohlräume zwischen dem schon annähernd strangförmigen Laib und dem Formrohr verbleiben, und dann in Annahme einer vollständigen Füllung und entsprechender Festlegung der Scheibendicke das Ist-Gewicht der Scheibe unter einem erwarteten Soll-Gewicht, z.B. dem Bezugs-Gewicht liegt.

Der Hersteller der Scheiben wird als Bezugs-Gewicht entweder das Nenn-Gewicht wählen, also das auf der fertigen Packung angegebene Gewicht der einzelnen Scheibe, wenn in der Fest-Verpackung nur eine Einscheiben-Portion verpackt ist, oder zu seiner eigenen Sicherheit ein etwas höher liegendes Gewicht als Bezugs-Gewicht wählen, um vor allem die Einhaltung des Durchschnittsgewichts über die gesamte Charge sicherzustellen.

Da die Einhaltung des Durchschnittsgewichts erfindungsgemäß auch durch andere Maßnahmen erreicht werden kann, wird davon ausgegangen, dass in der Regel als Bezugs-Gewicht das Nenn-Gewicht gewählt wird.

Ausgehend von dieser bekannten Vorgehensweise für das Herstellen gewichtsgenauer Scheiben wird erfindungsgemäß nun versucht, die zweite Bedingung zu erfüllen, also ein Untergewicht einzelner Scheiben möglichst zu vermeiden, indem trotz des über die Länge des Formrohres gleichen inneren Querschnittes die Dicken-Einstellungen für die einzelnen Scheiben so festgelegt werden, dass ihr Gewicht eine intern festgelegte Toleranz-Untergrenze rechnerisch mindestens erreicht oder gar überschreitet, wobei aber diese interne Toleranz-Untergrenze über den Verlauf des Laibes in Längsrichtung unterschiedlich festgelegt wird.

Eine solche interne, also vom Hersteller der Scheiben, festgelegte Toleranz-Untergrenze kann das Bezugs-Gewicht sein, welches alle Scheiben mindestens aufweisen sollen. Dieses Bezugs-Gewicht ist - sofern es von dem extern vorgegebenen Nenn-Gewicht abweicht - ebenfalls vom Hersteller der Scheiben und somit intern festgelegt, aber in starker Abhängigkeit vom Nenn-Gewicht.

Der Grundgedanke besteht darin, über den Verlauf des Laibes in dessen Längsrichtung, also für die einzelnen in dieser Längsrichtung hintereinander abzutrennenden Scheiben, unterschiedliche interne Toleranz-Untergrenzen für das Gewicht der einzelnen Scheiben festzulegen, aber für alle Laibe einer Charge in gleicher Weise, da es sich innerhalb einer Charge immer um ähnlich Laibe, beispielsweise immer das gleiche Fleischstück hinsichtlich der Anordnung in den Tieren handelt und diese somit in etwa die gleiche Form und Konsistenz aufweisen.

Dementsprechend gibt es bei allen Laiben einer Charge jeweils Bereiche in Längsrichtung des Laibes, bei denen die Gefahr, dass bei gleicher Scheibendicke für alle Scheiben des Laibes in diesen Bereichen die hergestellten Scheiben dennoch ein Gewicht unter der internen Toleranz-Untergrenze aufweisen, besonders groß ist.

Bei einem im Ausgangszustand tonnenförmigen oder birnenförmigen Laib werden dies der Anfangsbereich und Endbereich, also die ersten und die letzten abzutrennenden Scheiben, sein.

Bei einem eher spindelförmigen Laib können dies auch die Scheiben im mittleren Längenbereich des Laibes sein, wobei solche spindelförmigen Ausgangsformen seltener gewichtsgenau aufgeschnitten werden müssen.

Bei den häufiger vorkommenden tonnenförmigen oder birnenförmigen Ausgangsformen besteht bei den ersten zwei oder drei sowie auch bei den letzten zwei oder drei Scheiben die Gefahr, dass sich der Laib dort nicht bis zu seiner Stirnfläche hin vollständig an die Innenumfangsfläche des Formrohres anschmiegt, während diese Gefahr im mittleren Längenbereich des Laibes geringer ist.

Deshalb wird - bei im Ausgangszustand tonnenförmigen oder birnenförmigen Laiben - diese interne Toleranz-Untergrenze im mittleren Längenbereich, die sogenannte Mitten-Toleranz-Untergrenze, **niedriger** festgelegt als die interne Toleranz-Untergrenze am Anfang und Ende des Laibes, also in den Randbereichen des Laibes, die deshalb als interne Rand-Toleranz-Untergrenze bezeichnet wird.

Die Mitten-Toleranz-Untergrenze kann insbesondere das Bezugsgewicht oder nur wenig mehr sein.

Damit nicht beide Endbereiche der Laibe einer Charge gleich gefährdet sind, wäre es wichtig, dass alle Laibe mit derselben Orientierung, also beispielsweise bei einer Birnenform mit dem dickeren Ende voran, zum Aufschneiden in das Formrohr eingelegt werden, denn es kann sein, dass die interne Toleranz-Untergrenze gegenüber dem Mittenbereich nur an einem der beiden Endbereiche verändert werden muss oder in den beiden Endbereich unterschiedlich verändert werden muss.

Gerade dann, wenn dies nicht sichergestellt werden kann, oder die qualitative und quantitative Ähnlichkeit der Laibe innerhalb einer Charge zu wünschen übrig lässt, bietet die erfindungsgemäße Vorgehensweise eine Absicherung gegen zu hohen Ausschuss.

Durch die am Anfang und/oder Ende des Laibes relativ **hoch liegende** Rand-Toleranz-Untergrenze wird die Gefahr, dass eine dortige Scheibe wegen mangelhafter Füllung des Formrohres in diesem Bereich dennoch ein Gewicht unter dem Bezugs-Gewicht besitzt, deutlich verringert.

Zwar wird die Gefahr größer, dass eine solche Scheibe dafür ein erhebliches Übergewicht besitzt, jedoch ist dieser Verlust an Material bei nur ein oder zwei Scheiben am Anfang und/oder am Ende des Laibes vergleichsweise gering gegenüber der Alternative, immer wieder eine Ausschussscheibe wegen Untergewicht vor allem am Anfang und Endes des Laibes herzustellen.

Natürlich orientiert sich auch diese interne Toleranz-Untergrenze am Bezugs-Gewicht, und entspricht diesem oder liegt etwas höher als das Bezugs-Gewicht. Häufig entspricht die interne Toleranz-Untergrenze einer extern vorgegebenen Toleranz-Untergrenze oder liegt gegenüber dieser etwas höher, wobei eine solche extern vorgegebene Toleranz-Untergrenze unter dem intern festgelegten Bezugs-Gewicht liegt, falls die beiden voneinander abweichen.

Hinsichtlich des Gewichts etwas höher oder etwas niedriger soll in diesem Zusammenhang bedeuten, dass es sich um eine Differenz von maximal 5%, besser maximal 4%, besser maximal 3%, besser maximal 2% gegenüber der extern vorgegebenen Toleranz-Untergrenze handelt.

Denn alle intern vorgegebenen Gewichtsgrenzen dienen lediglich dazu, einerseits die extern, also vom Auftraggeber oder gar vom Gesetzgeber vorgegebenen, Gewichtsgrenzen zu erfüllen, aber gleichzeitig sowohl Übergewicht der Scheiben und vor allem Ausschuss-Scheiben zu vermeiden.

Vorzugsweise wird als Dicken-Einstellung für die erste Scheibe oder die ersten Scheiben bzw. für die letzte Scheibe oder die letzten Scheiben des Laibes, insbesondere des ersten Laibes einer Charge, entweder eine Dicken-Einstellung entsprechend dem Bezugs-Gewicht gewählt oder eine Dicken-Einstellung die derjenigen Dicke entspricht, wenn man die im verpressten Zustand, insbesondere im Aufschneide-Zustand, ermittelte Länge des Laibes durch die Anzahl der vorher daraus ermittelten maximalen Anzahl von erzielbaren Scheiben dividiert.

Neben den beschriebenen Maßnahmen, die auf die Vermeidung von Untergewichtigen und deshalb nur Ausschuss bildenden Scheiben gerichtet sind, muss natürlich die vom drohenden Schaden wichtigere Einhaltung des Durchschnittsgewichtes auf oder über Nenn-Gewicht eingehalten werden.

Eine steuerungstechnisch relativ einfache Methode besteht darin, das erforderliche Durchschnittsgewicht der Charge bereits innerhalb von Teilbereichen einer Charge, insbesondere innerhalb jedes einzelnen aufgeschnittenen Laibes oder rollierend über nur wenige, etwa zwei aufeinander folgende, Laibe einzuhalten, denn wenn dies für jeden Teilbereich oder Laib erreicht wird, ist diese Bedingung auch für die gesamte Charge erfüllt.

Der Nachteil besteht darin, dass für die Einhaltung innerhalb eines Laibes eventuell die Ausgleichsmöglichkeiten begrenzt sind, um diese Bedingung für den ganzen Laib einzuhalten und damit in Summe über alle Laibe mehr Übergewicht anfallen kann, als bei Überwachung der Bedingung des erforderlichen Durchschnitts-Gewichts unabhängig von den einzelnen Laiben über die gesamte aufzuschneidende Charge.

Für die Einhaltung pro Laib müssen zunächst einmal die Ist-Gewichte aller abgetrennten Scheiben möglichst kurz nach deren Erzeugung, vorzugsweise in Echtzeit vor deren Abtransport, ermittelt werden, denn nur auf Basis dieser Daten kann eine entsprechende Steuerung für die Dicken-Einstellungen der restlichen Scheiben des Laibes erfolgen.

Hierfür wird aus den Ist-Gewichten aller bereits von einem Laib abgeschnittenen Scheiben deren Durchschnittsgewicht ermittelt, und falls dieses unter der als Soll-Durchschnittsgewicht dienenden Grenze, beispielsweise dem Bezugs-Gewicht oder dem Nenn-Gewicht, liegt, werden für die noch abzuschneidenden Scheiben für deren Dicken-Einstellungen Maßnahmen getroffen, damit über alle Scheiben des Laibes das vorgegebene Soll-Durchschnittsgewicht, wie es in der Regel nur für die gesamte Charge von Laiben vorgegeben ist, rechnerisch voraussichtlich erreicht oder gar überschritten wird.

Hierfür wird häufig für den Rest der vom Laib abzuschneidenden Scheiben dieses Laibes das Bezugs-Gewicht oder die interne Toleranz-Untergrenze entsprechend erhöht, also bei Veränderung der internen Toleranz-Untergrenze sowohl deren Mitten-Toleranz-Untergrenze und/oder die Rand-Toleranz-Untergrenze.

Beispielsweise kann die Rand-Toleranz-Untergrenze für das hintere Ende des Laibes - also den Längenbereich, der als letztes aufgeschnitten wird - grundsätzlich erst während des Aufschneidens des Laibes und abhängig von den ermittelten Ist-Gewichten der bereits von diesem Laib abgetrennten Scheiben festgelegt werden, was am sinnvollsten erst während dem Aufschneiden der zweiten Hälfte des Laibes erfolgt.

Vorzugsweise kann die Rand-Toleranz-Untergrenze für das hintere Ende des Laibes während des Aufschneidens laufend so angepasst werden, dass über alle Scheiben des Laibes das geforderte Soll-Durchschnittsgewicht erreicht wird.

Dabei hängt es von der Geschwindigkeit des Verwiegens, des Ermittelns des Ist-Gewichtes der Scheiben, des Ermittelns der Toleranz-Untergrenze zumindest für den hinteren Rand usw. ab, bis zu welcher abzuschneidenden Scheibe die Ist-Gewichte der erzeugten Scheiben noch berücksichtigt werden können für die Bestimmung der Rand-Toleranz-Untergrenze für das hintere Ende.

Auch die Mitten-Toleranz-Untergrenze muss keine für den Mitten-Bereich einheitliche Größe sein, sondern kann sogar von einer Scheibe zur nächsten im Mitten-Bereich unterschiedlich festgelegt werden, vorzugsweise in Abhängigkeit der Ist-Gewichte der bereits erzeugten und verwogenen Scheiben aus diesem Laib.

Die analog gleiche Vorgehensweise kann statt über die Scheiben eines Laibes über die Scheiben der gesamten Charge durchgeführt werden, wobei dann vorzugsweise die Veränderung der Dicken-Einstellungen für die noch abzutrennenden Scheiben der Charge in Abhängigkeit vom ermittelten Durchschnittsgewicht der bereits abgetrennten Scheibe dieser Charge unabhängig davon durchgeführt wird, ob es sich bei den abzutrennenden Scheiben um Scheiben aus dem Rand-Bereich oder dem Mitten-Bereich handelt.

Es wird also beispielsweise sowohl die Rand-Toleranz-Untergrenze als auch die Mitten-Toleranz-Untergrenze für die zukünftigen Scheiben und Laibe in gleicher Weise verändert.

Um für die Einhaltung des Durchschnittsgewichts - sei es pro Laib oder für eine Teil-Charge oder die gesamte Charge - einen Sicherheitsabstand einzubauen, wird die hierfür durchgeführte Erhöhung des Bezugs-Gewichts und/oder der internen Toleranz-Untergrenze so festgelegt, dass über die Anzahl der noch abzuschneidenden Scheiben des Laibes oder der Charge - je nachdem über welche Gesamtheit das Durchschnitts-Gewicht eingehalten werden soll - das bisher aufgelaufene Fehl-Gewicht voraussichtlich ausgeglichen wird und um mindestens 1%, besser mindestens 2%, besser mindestens 3% übertroffen wird.

Die Überprüfung des bisherigen Durchschnitts-Ist-Gewichts wird während des Aufschneidens mehrfach, insbesondere nach dem Abschneiden jeder weiteren Scheibe, überprüft, und das Bezugs-Gewichts und/oder die interne Toleranz-Untergrenze entsprechend verändert.

Falls die Ermittlung des momentanen Durchschnitts- Ist-Gewichts ein zu hohes Durchschnitts-Ist-Gewicht der Scheiben ergibt, wird analog anders herum verfahren.

Um dabei das Übergewicht - sei es pro Laib oder für die gesamte Charge - in Grenzen zu halten, wird die hierfür durchgeführte Erhöhung des Bezugs-Gewichts und/oder der internen Toleranz-Untergrenze so gedeckelt, dass über die Anzahl der noch abzuschneidenden Scheiben des Laibes oder der Charge das bisher aufgelaufene Fehl-Gewicht voraussichtlich ausgeglichen wird, aber um nicht mehr als 6%, besser mit nicht mehr als 5%, besser nicht mehr als 4% überschritten wird.

Um Dicken-Einstellungen, insbesondere die interne Toleranz-Untergrenze, auch für den ersten Laib einer Charge sinnvoll festlegen zu können, werden vorzugsweise Erfahrungswerte aus Dicken-Einstellungen und internen Toleranz-Untergrenzen vorangegangener Chargen von ähnlichen oder gleichartigen Laiben berücksichtigt.

So können die rechnerisch dem gewünschten Bezugs-Gewicht entsprechenden, über die Länge des Laibes gleichmäßigen, Dicken-Einstellungen aller Scheiben für einzelne Scheiben-Nummern entsprechend der bei früheren Chargen mit gleichen oder ähnlichen Laiben ermittelten Ist-Gewichten der Scheiben verändert, also erhöht oder erniedrigt, werden.

Auch sollte klar sein, dass es bei einem externen Toleranz-Bereich häufig nur eine externe Toleranz-Untergrenze gibt, dagegen keine externe Toleranz-Obergrenze. Bei den intern vorgegebenen Gewichts-Grenzen kann es jedoch durchaus sinnvoll sein, auch eine interne Toleranz-Obergrenze festzulegen, vorzugsweise wiederum getrennt für Mitten-Bereich und Rand-Bereich, um auch dadurch das unerwünschte Übergewicht von Scheiben in Grenzen zu halten.

Dann wird als Bezugs-Gewicht entweder diese externe Toleranz-Untergrenze - die für die einzelnen Scheiben in aller Regel unter dem Nenn-Gewicht liegt, da einzelne Scheiben durchaus etwas weniger wiegen dürfen als das auf der Packung angegeben Nenn-Gewicht, aber eben nicht die gesamte Charge - gewählt oder aus Sicherheitsgründen ein leicht darüber liegendes, vorzugsweise auch über dem Nenn-Gewicht liegendes, Gewicht,

Ferner sollte klar sein, dass bei spindelförmigen Laiben bzgl. Mitten-Toleranz-Werten und Rand-Toleranz-Werten genau umgekehrt vorgegangen werden soll wie vorstehend für tonnenförmige Laibe beschrieben.

Die Laibe einer Charge können vor allem hinsichtlich ihrer Größe durchaus so unterschiedlich sein, dass trotz gleichem Bezugs-Gewicht und/oder Nenn-Gewicht aus den einzelnen Laiben unterschiedliche Scheiben-Anzahlen erzielbar sind.

Dann wird die Anzahl der Scheiben, welche den vorderen und/oder hinteren Rand-Bereich bilden, festgelegt, meist über die gesamte Charge hinweg eine gleichbleibende Anzahl, und alle anderen Scheiben werden dann als zum Mitten-Bereich gehörig betrachtet und behandelt.

Hinsichtlich der dafür benutzten Aufschneidemaschine wird die bestehende Aufgabe gelöst mit einer Maschine, die anhand der nachfolgenden Figuren erläutert wird.

### c) Ausführungsbeispiele

Ausführungsformen gemäß der Erfindung sind im Folgenden beispielhaft näher beschrieben. Es zeigen:
- **Figur 1a - d:**: eine Aufschneidemaschine in Prinzip-Darstellung von der Seite betrachtet in unterschiedlichen Phasen des Aufschneidens eines Laibes,
- **Figur 2a, b:**: im Querschnitt zweiteilige Formrohre in verschiedenen Betriebszuständen,
- **Figur 3a:**: einen verpressten Laib in der Seitenansicht, bei dem die daraus herzustellenden Scheiben bereits eingezeichnet sind,
- **Figur 3b:**: ein Gewichtsdiagramm über alle Scheiben verschiedener Laibe bei Gewichtsanpassung relativ zur Bezugsgewicht,
- **Figur 4a, b:**: Diagramme intern und/oder extern vorgegebener Gewichts-Grenzen über die Länge eines Laibes,

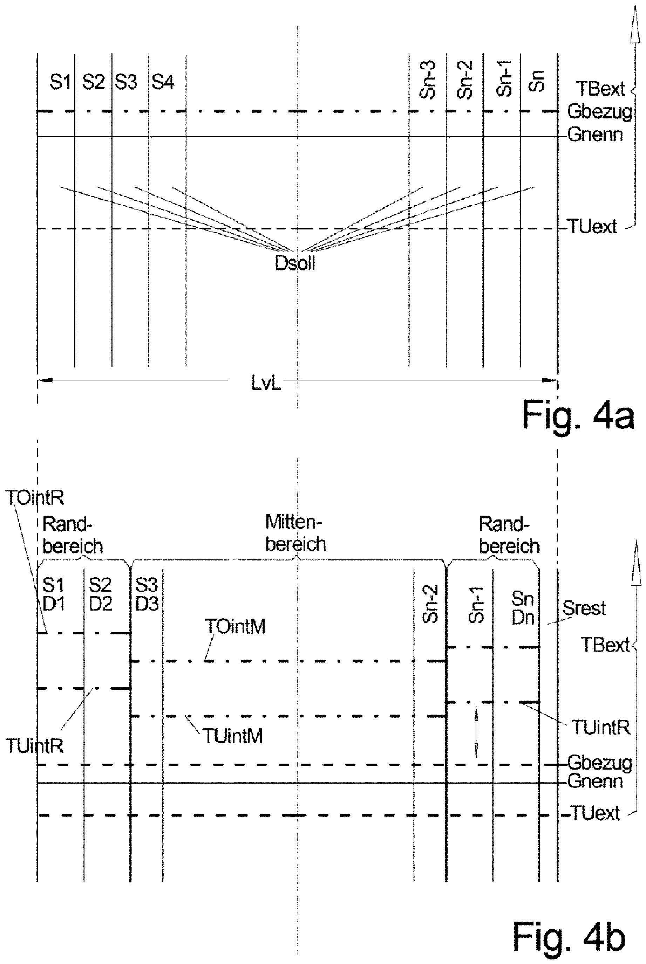

Wie **Figur 4a** zeigt, sind dem Hersteller sogenannter Fest-Verpackungen - also von verpackten Lebensmitteln mit aufgedrucktem Nenn-Gewicht **Gnenn,** welches dem Käufer damit sozusagen fest zugesichert wird - einerseits das Nenn-gewicht **Gnenn,** welches auf der Packung aufgedruckt ist, vorgegeben, und andererseits eine externe Toleranz-Untergrenze **TUext,** wie zuvor beschrieben, in der Regel die Toleranz-Untergrenze für einzelne Scheiben.

Er kann sich für die Steuerung der Dicken-Einstellungen **D** selbst ein einzuhaltendes Bezugs-Gewicht **Gbezug** vorgeben, welches beispielsweise direkt das Nenn-Gewicht **Gnenn** ist. Wenn dann jedoch der Durchschnitt der Ist-Gewichte **Gist** aller Scheiben **S1** - **Sn** einer Charge nur geringfügig unter diesem Nenn-Gewicht **Gnenn** liegt, ist die gesamte produzierte Charge an Scheiben Ausschuss.

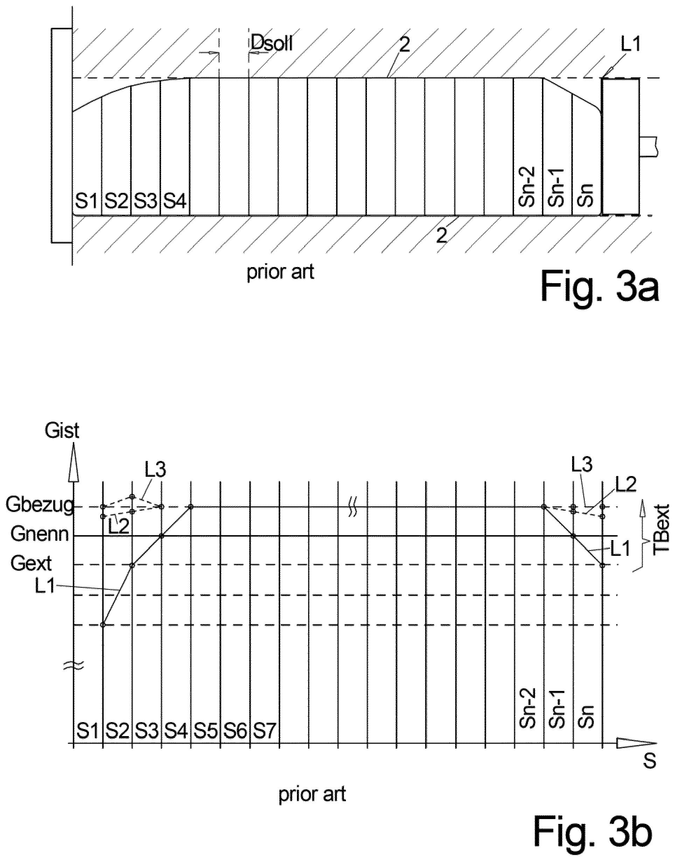

Deshalb wird häufig als intern gewähltes Bezugs-Gewicht **Gbezug** ein etwas höheres Gewicht als das Nenn-Gewicht **Gnenn** gewählt, um dieses Risiko zu minimieren, wie in **Figur 3b** und **Figur 4a, b** dargestellt.

Denn wie **Figur 3a** zeigt, füllt auch ein - in diesem Fall von einem Längspressstempel **4** gegen eine Anschlagplatte **13** - verpresster Laib **L1** den Hohlraum des Formrohres **2** gerade am Anfang und Ende nicht immer wie gewünscht aus. Schneidet man dann alle Scheiben mit der rechnerisch richtigen Dicken-Einstellung **Dsoll** auf, die theoretisch mindestens zum Bezugs-Gewicht **Gbezug** führen sollte, wären die ersten Scheiben **S1, S2, S3** sowie die letzten Scheiben **Sn-1, Sn** dennoch untergewichtig.

Wie man anhand von **Figur 3b** erkennt, hat man in der Vergangenheit solche untergewichtigen Anfangs- und End-Scheiben für den ersten Laib **L1** hingenommen, aber basierend auf den Ist-Gewichten von dessen Scheiben für die Anfangs- und End-Scheiben der nachfolgenden Laibe **L2, L3** die Dicken-Einstellungen **D1 - Dn** korrigiert, um zu erreichen, dass deren Gewichte möglichst bereits beim zweiten Laib **L2** über dem gewählten Bezugs-Gewicht **Gbezug** liegen, aber nicht allzu weit darüber.

Dies ist jedoch von der Berechnung aufwändig, und der Erfolg hängt von mehreren Faktoren ab, die auch die Berechnung der Korrekturwerte schwierig machen, wie beispielsweise die Anzahl der letzten bereits für die Berechnung berücksichtigten, aufgeschnittenen Laibe oder auch die Frage, ob innerhalb einer Charge prinzipiell ähnlicher Laibe dennoch Ausreißer bei Form und Gewicht vorliegen können, die durch die Berücksichtigung vorangehender Laibe nicht ausgeglichen werden können, und vor allem die Häufigkeit solcher Ausreißer.

Erfindungsgemäß wird gemäß **Figur 4b** eine sehr viel einfachere Methode vorgeschlagen, die auch bei relativ starken Schwankungen von Form und Größe der Laibe innerhalb einer Charge anwendbar ist:
Damit die bei einem in unverpressten Zustand Tonnen-förmigen oder Birnen-förmigen Laibe auch im verpressten Zustand kritischen Anfangs- und End-Scheiben hinsichtlich des Gewichts mit hoher Wahrscheinlichkeit zumindest über der externen Toleranz-Untergrenze **TUext,** vorzugsweise über dem Nenn-Gewicht **Gnenn** oder gar über dem Bezugs-Gewicht **Gbezug** liegen, gibt sich der Hersteller selbst eine interne Toleranz-Untergrenze **TUint** für das Gewicht der Scheiben **S1, S2**....vor, anhand der die Dicken-Einstellungen **D1, D2**....für die Scheiben **S1, S2**....festgelegt werden sollen, und zwar einerseits für die kritischen Randbereiche einen - wenn für beide Randbereiche gleich gewählt - interne Rand-Toleranz-Untergrenze **TUintR** und analog für den dazwischen verbleibenden Mittenbereich an Scheibennummern eine interne Mitten-Toleranz-Untergrenze **TUintM.**

Dabei liegt die interne Rand-Toleranz-Untergrenze **TUintR** höher als die interne Mitten-Toleranz-Untergrenze **TUintM,** sodass auch bei nicht vollständig gefülltem Formrohr-Hohlraum in diesen Randbereichen die Wahrscheinlichkeit groß ist, dass eine Scheibe, deren Dicken-Einstellung sich an dieser internen Toleranz-Untergrenze orientiert hat, tatsächlich ein Ist-Gewicht aufweist, welches zumindest über der externen Toleranz-Untergrenze **TUext** liegt, vielleicht sogar über dem Nenn-Gewicht **Gnenn** oder sogar über dem Bezugs-Gewicht **Gbezug.**

Da für den Mittenbereich die Gefahr des nicht vollständig gefüllten Formrohr-Hohlraumes **7** bei einem im Ausgangszustand Tonnen-förmigen Laib sehr viel weniger groß ist, kann diese interne Mitten-Toleranz-Untergrenze **TUintM** niedriger gewählt werden als die Rand-Toleranz-Untergrenze **TUintR,** ohne große Gefahr, dass die aus diesem Mittenbereich hergestellten Scheiben unterhalb der tiefsten Gewichtsschwelle, der externen Toleranz-Untergrenze **TUext,** liegen.

Dabei muss die interne Mitten-Toleranz-Untergrenze **TUintM** nicht einmal zwingend über dem Bezugs-Gewicht **Gbezug** und/oder über dem Nenn-Gewicht **Gnenn** liegen, sondern kann sogar knapp darunter liegen, solange sie nur über der externen Toleranz-Untergrenze **TUext,** liegt.

Dadurch kann häufig die ursprünglich theoretisch berechnete, aus einem Laib erzielbare Anzahl von die Gewichtsbedingungen einhaltenden Scheiben erreicht werden.

Je nach Form des unverpressten Laibes, z.B. bei einem stark birnenförmigen Laib, kann es auch sinnvoll sein, die internen Rand-Toleranz-Untergrenzen **TUintR** für das vordere Ende und das hintere Ende, also in **Figur 4b** den linken und den rechten Randbereich, getrennt und unterschiedlich festzusetzen.

Um andererseits zu hohe Übergewichte der einzelnen Scheiben zu vermeiden, kann sich der Hersteller der Scheiben zusätzlich eine interne Toleranz-Obergrenze **TOintR** setzen und die Dicken-Einstellungen so wählen, dass diese interne Toleranz-Obergrenze **TOintR** voraussichtlich nicht erreicht oder gar überschritten wird.

**Figur 4b** zeigt auch, dass die nach diesem Verfahren hergestellten Scheiben **S1** bis **Sn** zumindest im Mittenbereich geringfügig geringere Dicken-Einstellungen **D1, D2**.... aufweisen können als Scheiben, deren rechnerische Dicken-Einstellung **Dsoll** gemäß **Figur 4a** für alle Scheiben **S1** bis **Sn** gleich und so gewählt werden, dass die gesamte Länge **LvL** des verpressten Laibes nur durch die maximal zu erzielende Anzahl **Sn** von Scheiben, welche mindestens das Bezugs-Gewicht **Gbezug** besitzen, dividiert wird.

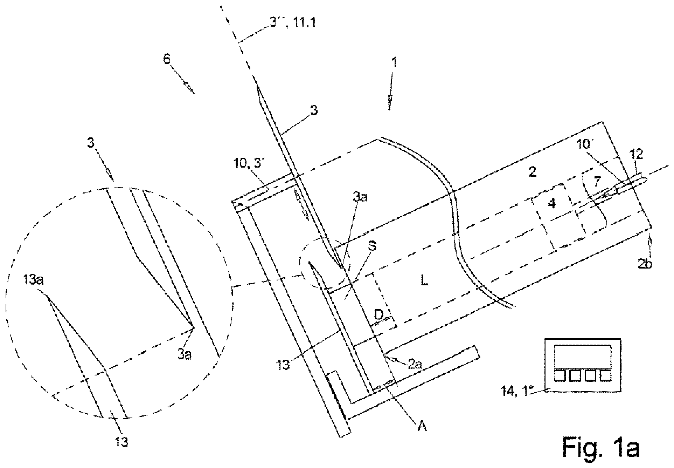

Dadurch kann bei der erfindungsgemäßen Vorgehensweise, und selbst dann, wenn die Scheibendicke in den Randbereichen größer war als die rechnerische Dicken-Einstellung **Dsoll,** eine Restscheibe **Srest** - über die rechnerisch ermittelte Anzahl von nicht untergewichtigen Scheiben hinaus - übrig bleiben, deren Gewicht unter allen Grenzwerten, voraussichtlich auch unter der externen Toleranz-Untergrenze **TUext,** liegt, jedoch vom Hersteller der Scheiben separat und gegen Bezahlung verwertet werden kann, während bei der Verteilung der Länge **LvL** auf die einzelnen Gewichts-korrekten, erzielbaren Scheiben **S1** bis **Sn** eines Laibes **L** gemäß **Figur 4a** dies ein nicht vergütetes give away darstellen würde. Hinsichtlich der in den **Figuren 1a bis 1d** rudimentär dargestellten Aufschneidemaschine 1 zum Abschneiden von Scheiben **S** von Laiben **L** nacheinander, insbesondere unter Anwendung des beschriebenen Verfahrens, umfasst eine solche Aufschneidemaschine 1 zum Einen eine Haltevorrichtung 2 für den aufzuschneidenden Laib **L.**

Die Haltevorrichtung 2 ist hier ein umfänglich geschlossenes und an den stirnseitigen Enden offenes Formrohr 2 mit einem über seine gesamte Länge gleichbleibenden Querschnitt seines inneren Freiraumes 7.

Ferner umfasst die Aufschneidemaschine 1 eine Schneideinheit 6, bei der insbesondere ein um eine Messer-Achse 3' rotierendes, kreisscheibenförmiges oder sichelförmiges Messer 3, welches vom vorderen Ende des Laibes L eine Scheibe S abtrennt, die aus dem Schneid-Ende 2a des Formrohres 2 vorsteht, sowie eine Steuerung 1*, die alle beweglichen Teile der Aufschneidemaschine 1 steuert.

Erfindungsgemäß ist die Steuerung 1* so ausgebildet, dass sie in der Lage ist, die Aufschneidemaschine 1 entsprechend dem beschriebenen Verfahren zur Variation des Gewichts der Scheiben S durchzuführen.

Vorzugsweise umfasst die Aufschneidemaschine 1 außer dem Formrohr 2 einen vom hinteren offenen Ende, dem Belade-Ende 2b, passgenau in dessen inneren Freiraum 7 einfahrbaren, am vorderen Ende einer Kolbenstange 12 befestigten, Längs-Pressstempel 4 zum Verpressen des Laibes L in Längsrichtung 10, bis dieser den vor dem Längs-Pressstempel 4 verbleibenden Innenraum 7 möglichst vollständig ausfüllt und einen ebenfalls über seine gesamte Länge gleichmäßigen Querschnitt entsprechend dem Querschnitt des Innenraumes 7 besitzt.

Ferner ist meist eine Anschlagplatte 13 für den aus dem Formrohr 2 nach vorne mittels des Längs-Pressstempels 4 herausgeschobenen Laib **L** vorhanden, deren Abstand **A** zum vorderen Ende, dem Schneid-Ende 2a des Formrohres 2, eingestellt werden kann.

Die Anschlagplatte 13 kann im vollständig an die vordere Stirnfläche des Formrohres 2 herangefahrenen Zustand auch als Frontanschlag beim Längsverpressen des Laibes L im Formrohr 2 durch den Längs-Pressstempel 4 dienen.

Das Messer 3 wird dagegen meist an einer immer gleichen Längsposition, insbesondere relativ zum Formrohr 2, insbesondere unmittelbar an der vorderen Stirnfläche des Formrohres 2, z.B. in einer 1. Querrichtung 11.1 hin und her bewegt und dadurch von dem inzwischen wieder bis zur Anschlagplatte 13 vorwärtsgeschobenen Laib L jeweils eine Scheibe S abtrennt.

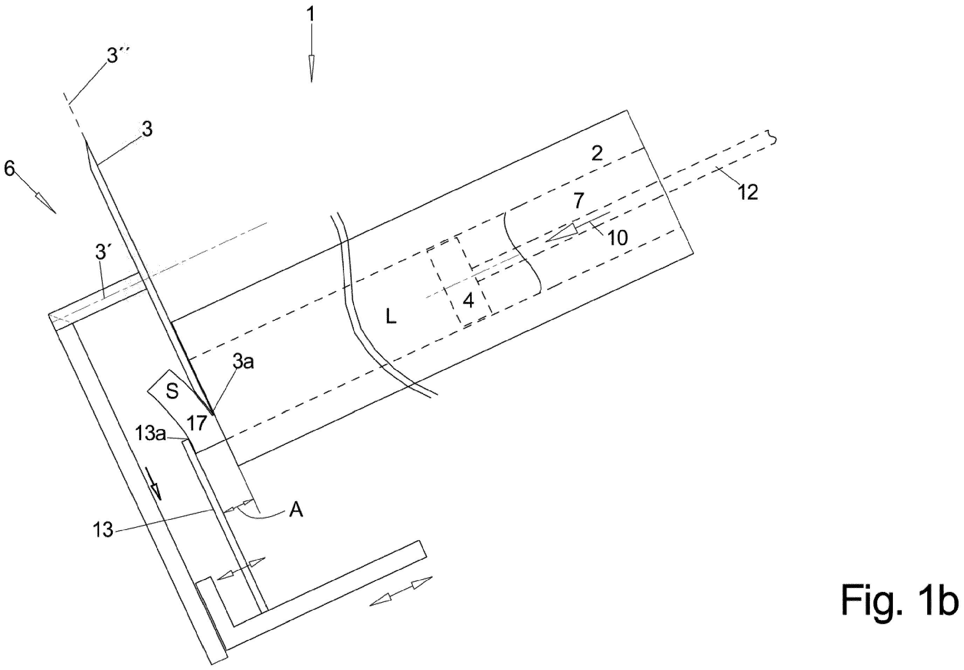

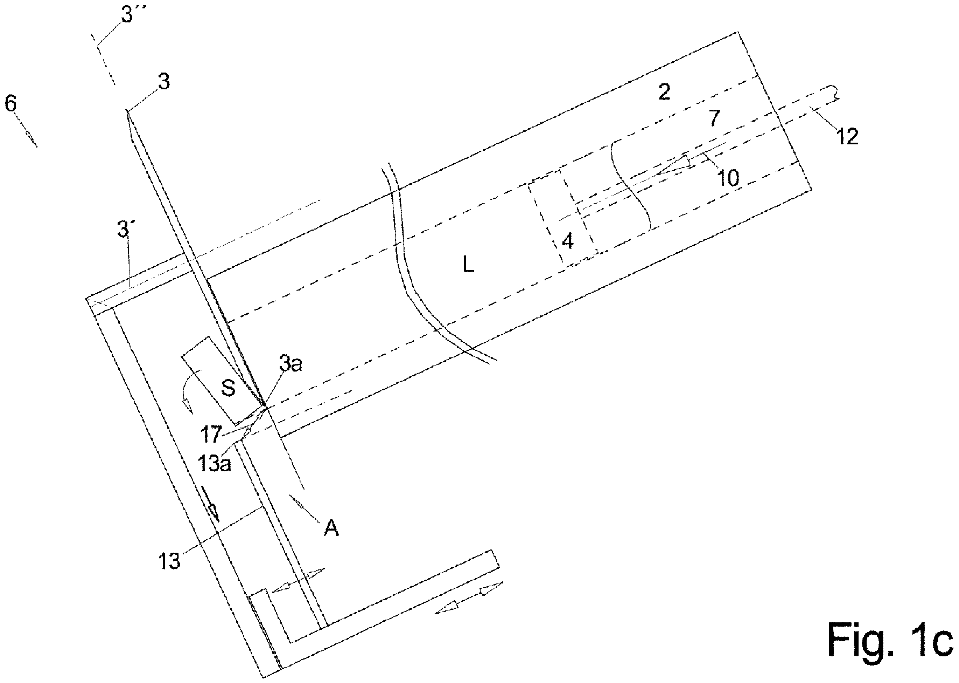

Wie die Abfolge der **Figuren 1a bis 1d** erkennen lässt, deckt vor dem Kontaktieren des Laibes L durch die Schneidkante 3a des Messers 3 die Abdeckplatte 13 - betrachtet in Längsrichtung 10 - den gesamten Querschnitt des Formrohres 2 ab, und bewegt sich beim zunehmenden Eintauchen der Schneidkante 3a des Messers 3 in den Laib L mit dieser zusammen z.B. in dieser ersten Querrichtung 11.1, so dass die sich dabei durch den Spalt 17 zwischen Schneidkante 3a und der Funktionskante 13a der Abdeckplatte 13 hindurchschiebend Scheibe S zum Schluss über diese Oberkante 13a - die angeschrägt sein kann oder nicht - der Anschlagplatte 13 herabkippen und auf den Abförderer 8 fallen kann, wie in den **Figuren 1b** **und** **1c** zu erkennen.

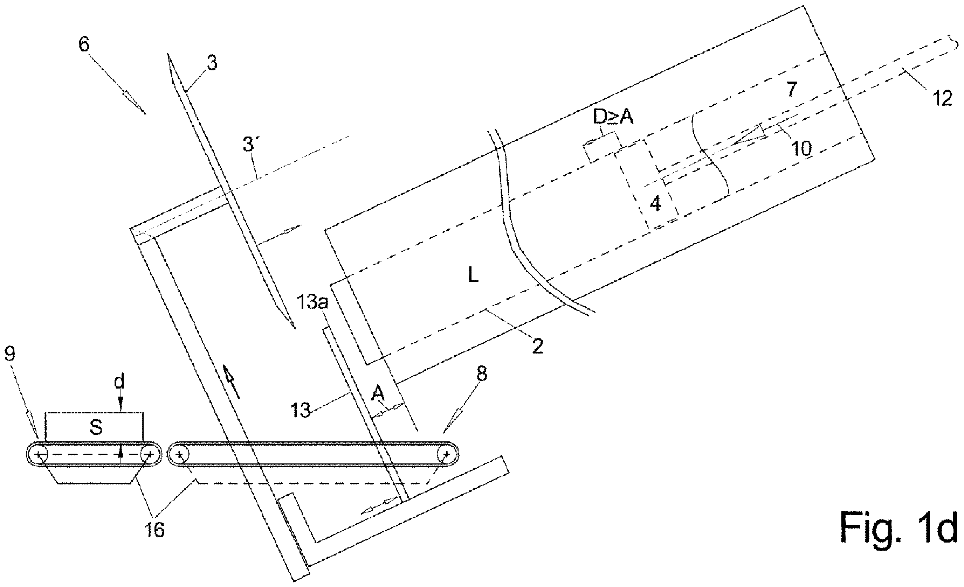

Anschließend bewegen sich Messer 3 und Anschlagplatte 13 entgegen der Eintauchrichtung, also in der Querrichtung 11.1, zurück, wie in **Figur 1d** dargestellt, und der Laib **L** wird wiederum über das vordere Schneidende 2a des Formrohres 2 hinausgeschoben bis zur Anlage an der Anschlagplatte 13, die auf den gewünschten Abstand **A,** insbesondere die Dickeneinstellung **D,** eingestellt wiederum in Längsrichtung 10 betrachtet den gesamten Querschnitt des inneren Formhohlraumes 7 abdeckt.

Wie am besten die Vergrößerung der **Figur 1a** zeigt, können in Längsrichtung 10 betrachtet Anschlagplatte 13 und Messer 3 in der Seitenansicht quer zur Eintauchrichtung 11.1 betrachtet geringfügig überlappen, wenn durch entsprechende Anschrägungen an den einander zugewandten Randbereichen sichergestellt ist, dass der dazwischen verbleibende Spalt 17 groß genug ist, damit sich die abgetrennte Scheibe S durch den Spalt 17 hindurchbewegen kann.

Eine solche Aufschneidemaschine 1 verfügt weiter über eine Waage 16 - siehe **Figur 1d** -, die das Ist-Gewicht **Gist** jeder abgetrennten Scheibe **S** einzeln ermittelt, sowie eine Bedieneinheit 14 - siehe **Figur 1a** - mit der insbesondere einerseits die Vorschub-Strecke, um die der Längs-Pressstempel 4 den Laib **L** vorwärts schiebt, vor dem Abtrennen der nächsten Scheibe eingestellt werden kann. Andererseits kann darauf basierend auch der Abstand **A** der Anschlagplatte 13 zu der Axialposition, an der sich das Messer 3 beim Abtrennen einer Scheibe S befindet, eingestellt werden, manuell und insbesondere automatisch durch die Steuerung 1*.

Die vor dem Abtrennen einer Scheibe **S** festzulegende Dickeneinstellung **D** ist diese Vorschubstrecke, wobei die Vorschubstrecke in aller Regel nicht nur genauso groß, sondern etwas größer ist als der eingestellte Abstand **A,** jedoch beide Parameter das spätere Gewicht **Gist** der abgetrennten Scheibe S beeinflussen.

Die Waage 16 befindet sich jedoch meist nicht unter dem Abförderer 8, auf den die abgetrennte Scheibe **S** direkt herabfällt, da aufgrund der Erschütterungen durch das Auftreffen der herab gefallenen Scheibe die exakte Gewichtsbestimmung sehr schwierig ist, sondern in der Regel erst unter dem unmittelbar darauf nachfolgenden weiteren Abförderer 9.

Wenn technisch möglich, sollte jedoch das Wiegen möglichst weit stromaufwärts und unmittelbar nach dem Abtrennen der Scheibe S, also insbesondere direkt nach dem Auftreffen auf dem Abförderer 8, erfolgen, denn das Gewicht Gist der soeben abgetrennten Scheibe S sollte möglichst früh bekannt sein, um davon abhängig die Dicken-Einstellungen **D** danach abzutrennender Scheiben S möglichst schnell beeinflussen zu können.

Der Laib **L** kann nicht nur in Längsrichtung 10 durch einen Längs-Pressstempel 4 verpresst werden, sondern auch - vorzugsweise vorher oder gleichzeitig - durch einen Quer-Pressstempel 5 in einer der Querrichtungen, vorzugsweise ebenfalls der ersten Querrichtung 11.1, in der sich das Messer 3 beim Abtrennen bewegt.

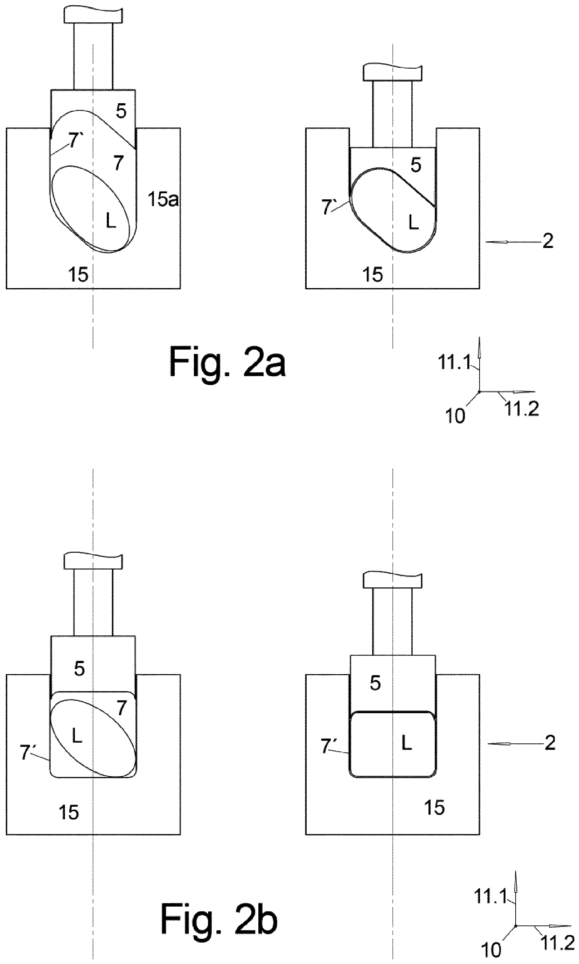

Entsprechende Ausbildungen von Formrohren 2 zeigen - betrachtet in der Längsrichtung 10 - die **Figuren 2a****, b:**
Dabei besteht das in Längsrichtung 10 betrachtete Formrohr 2 in Umfangsrichtung aus zwei Bauteilen, nämlich einer in dieser Blickrichtung U-förmigen Querpress-Wanne 15, in deren offene Seite hinein passend ein Quer-Pressstempel 5 in einer Querrichtung, vorzugsweise der ersten Querrichtung 11.1, eingefahren wird, und den zuvor eingelegten Laib **L**, der im unverpressten Ausgangszustand einen etwa elliptischen Querschnitt besitzt, in dieser Querrichtung 11.1 verpresst, bis dieser zumindest teilweise einen Querschnitt entsprechend dem Querschnitt 7' des verbleibenden inneren Freiraumes 7 im Formrohr 2 annimmt.

Der Quer-Pressstempel 5 kann dabei bis auf eine feste Querposition vorwärtsgefahren werden, so dass dann der Querschnitt 7' des inneren Freiraumes 7 im Formrohr 2 mit der Frontfläche 4a des Längs-Pressstempels 4 übereinstimmt, die dann eine nicht veränderbare Form und Größe besitzen kann.

Bevorzugt ist der Quer-Pressstempel 5 jedoch kraftgesteuert, so dass dessen endgültige Pressposition nicht feststeht. Dann muss der Längs-Pressstempel 4 in der Bewegungsrichtung des Quer-Pressstempels 5 einen variablen Querschnitt besitzen, der sich automatisch an den Querschnitt 7' des momentanen Innenraumes 7 des Formrohres 2 anpasst.

Während in **Figur 2b** der innere Freiraum 7 der Quer-Presswanne 15 einen Querschnitt 7' besitzt, der etwa rechteckig-förmig mit abgerundeten Kanten ist, besitzt in **Figur 2a** der innere Freiraum 7 einen Querschnitt 7', der einen gegenüber der tiefer herabreichenden Seitenwand 15a der Quer-Presswanne 15 stark gerundeten und schräg stehenden Boden aufweist, während die Frontfläche des Quer-Pressstempels 5 eine analog gegenläufige Kontur aufweist, sodass dies einen schräg stehenden, etwa parallelogramm-förmigen oder langloch-förmigen inneren Querschnitt 7' mit gerundeten Kanten im geschlossenen Formrohr 2 ergibt.

Ein solcher Querschnitt 7' des Innenraumes 7 kommt dem meist elliptischen Ausgangsquerschnitt der Laibe L näher als ein rechteckiger Querschnitt und erfordert eine geringere Querverpressung als bei der Querschnittsform 7' gemäß **Figur 2b****,** in der die Breite des inneren Freiraumes 7 meist geringer gewählt wird als die größte Erstreckung des etwa elliptischen Querschnittes der unverpressten Laibe **L.**

Die Steuerung 1* ist mit der Waage 16, mit der Bedieneinheit 14 und ebenso mit den Antrieben aller vorhandenen Pressstempel 4, 5 sowie den Antrieben für die Schneideinheit 6, insbesondere des Messers, 3, signaltechnisch verbunden, sodass von der Steuerung 1* alle Bewegungen der Aufschneidemaschine 1 automatisch gesteuert werden können.

### BEZUGSZEICHENLISTE

- **1**: Schneidemaschine
- **1***: Steuerung
- **2**: Formrohr, Haltevorrichtung
- **2**a: Schneid-Ende
- **2**b: Belade-Ende
- **3**: Messer
- **3'**: Messer-Achse
- **3"**: Messer-Ebene
- **3**a: Schneidkante
- **4**: Längs-Pressstempel
- **5**: Quer-Pressstempel
- **6**: Schneideinheit
- **7**: Formrohr-Hohlraum, innerer Freiraum
- 7': Querschnitt
- **8**: Abförderer
- **9**: Abförderer
- **10**: Längsrichtung, axiale Richtung,
- **10'**: Vorschubrichtung
- **11**: Querrichtung
- **11.1**: erste Querrichtung
- **11.2**: zweite Querrichtung
- **12**: Kolbenstange
- **13**: Anschlagplatte
- **13a**: Funktionskante, Oberkante
- **14**: Bedieneinheit
- **15**: Querpress-Wanne
- **16**: Waage
- **17**: Spalt
- **A**: Abstand
- **D, D1** - **Dn**: Dickeneinstellung der einzelnen Scheiben
- **Dsoll**: rechnerische Dickeneinstellung
- **d**: Scheibendicke
- **Gbezug**: Bezugsgewicht
- **Gist**: Ist-Gewicht
- **Gnenn**: Nenn-Gewicht
- **L, L1 bis Lz**: Laib
- **LvL**: Länge verpresster Laib
- **S, S1 bis Sn**: Scheibe
- **TBext**: Toleranzbereich
- **TUext**: Toleranz-Untergrenze
- **TBint**: Toleranzbereich
- **TUint**: Toleranz-Untergrenze
- **TOint**: Toleranz-Obergrenze
- **TUintM**: Mitten-Toleranz-Untergrenze
- **TOintM**: Mitten-Toleranz-Obergrenze
- **TUintR**: Rand-Toleranz-Untergrenze
- **TOintR**: Rand-Toleranz-Obergrenze

## Patentansprüche

1. **Verfahren** zum mindestens Erreichen eines Bezugs-Gewichtes (Gbezug) möglichst vieler einzelner Scheiben (S1 bis Sn). insbesondere beim Aufschneiden einer Charge von Laiben (L1 bis Lz) in Scheiben, durch automatische Variation der Dickeneinstellungen (D) für die abzutrennenden Scheiben (S1 bis Sn), wobei
A) jeder Laib (L1 bis Lz) in einer Haltevorrichtung (2) zum Halten des Laibes (z.B. Lx) und Vorwärtsschieben des Laibes während des Aufschneidens in Vorschubrichtung (10') angeordnet wird
B) das Gewicht oder das Volumen des jeweiligen Laibes (z.B. Lx) ermittelt wird,
C) daraus die maximale Anzahl (n) der aus diesem Laib (z.B. Lx) jeweils herstellbaren solchen Scheiben (S1 bis Sn) mit mindestens Bezugs-Gewicht (Gbezug) errechnet wird,
D) vorgegebene Dickeneinstellungen (D1 bis Dn) für diese einzelnen Scheiben (S1 bis Sn) dieses Laibes errechnet werden, bei der das Ist-Gewicht (Gist) jeder Scheibe (S1 bis Sn) mindestens dem Bezugs-Gewicht (Gbez) entsprechen sollte und
**dadurch gekennzeichnet, dass**
E) die Dickeneinstellungen (D1 bis Dn) für die einzelnen Scheiben (S1 bis Sn) dieses Laibes so festgelegt werden, dass die Ist-Gewichte (Gist) der einzelnen Scheiben (S1 bis Sn) mindestens eine intern in Abhängigkeit vom Bezugs-Gewicht (Gbezug) festgelegte Toleranz-Untergrenze (TUint) rechnerisch voraussichtlich erreichen und
F) die interne Toleranz-Untergrenze (TUint) über den Verlauf des Laibes (L1) in Vorschubrichtung (10') unterschiedlich festgelegt wird.

2. Verfahren nach Anspruch 1,
**dadurch gekennzeichnet, dass**
- im Schritt A) jeder Laib (L1 bis Lz) jeweils in einem umfänglich geschlossenen Formrohr (2) als Haltevorrichtung (2) mit über die gesamte Länge konstantem Querschnitt (7') des Formrohr-Hohlraumes (7) unter einem Messdruck aufgenommen wird,
- im Schritt B) das Gewicht oder das Volumen des darin aufgenommenen jeweiligen Laibes (z.B. Lx) aus ermittelter Länge sowie Querschnitt (7') des insbesondere unter dem Messdruck stehenden Teils des Formrohr-Hohlraumes (7), ermittelt wird.

3. Verfahren nach einem der vorhergehenden Ansprüche,
**dadurch gekennzeichnet, dass**
- die interne Toleranz-Untergrenze (TUint) im mittleren Bereich des Laibes als Mitten-Toleranz-Untergrenze (TUint**M**) niedriger festgelegt wird als eine Rand-Toleranz-Untergrenze (TUint**R**) in wenigstens einem des vorderen oder hinteren Randbereiches des Laibes
- oder umgekehrt.

4. Verfahren nach einem der vorhergehenden Ansprüche,
**dadurch gekennzeichnet, dass**
- die interne Toleranz-Untergrenze (TUint) dem Bezugs-Gewicht (Gbezug) entspricht oder **höher** liegt,
und/oder
- die interne Toleranz-Untergrenze (TUint) einer externen Toleranz-Untergrenze (TUext) entspricht oder **höher** liegt, welche insbesondere unter dem Bezugs-Gewicht (Gbez) liegt.

5. Verfahren nach einem der vorhergehenden Ansprüche,
**dadurch gekennzeichnet, dass**
als Dickeneinstellungen (D1...) für die 1. Scheibe (S1) oder die ersten Scheiben (S1, S2,) des Laibes (L1)
- entweder eine Dickeneinstellung (D1) entsprechend dem Bezugs-Gewicht (Gbezug) gewählt wird
- oder eine Dickeneinstellung (D1) entsprechend der durch die Anzahl der aus diesem Laib (L1) maximal erzielbaren Anzahl von Scheiben mit Bezugs-Gewicht (Gbez) dividierten Länge des Laibes (L1) gewählt wird.
(Für 3. Bedingung, innerhalb **Laib** Durchschnittsgewicht halten:)

6. Verfahren nach einem der vorhergehenden Ansprüche,
bei dem im Durchschnitt über einen **Laib** (L1) das vorgegebene Nenn-Gewicht (Gnenn) und/oder Bezugs-Gewicht (Gbezug) erreicht werden soll,
**dadurch gekennzeichnet, dass**
- das Ist-Gewicht (Gist) der, insbesondere aller, bisher abgetrennten Scheiben (S1 bis Sn) der, insbesondere aller, Laibe (L1 bis Lz) der Charge ermittelt wird,
- aus den Ist-Gewichten (Gist) aller bereits hergestellten Scheiben des **Laibes** (L1) das Durchschnittsgewicht ermittelt wird und falls dieses unter dem bisherigen Bezugs-Gewicht (Gbezug) und/oder dem Nenn-Gewicht (Gnenn) liegt, für die noch abzuschneidenden Scheiben solche Maßnahmen zum Erhöhen deren Durchschnittsgewichtes getroffen werden, dass das Durchschnittsgewicht aller Scheiben dieses Laibes (L1) das Bezugs-Gewicht (Gbezug) und/oder das Nenn-Gewicht (Gnenn) rechnerisch voraussichtlich mindestens erreicht,
- insbesondere indem das bisherige Bezugs-Gewicht (Gbezug) und/oder die bisherige Toleranz-Untergrenze (TUint) für den Rest der Scheiben dieses **Laibes** (L1) erhöht wird.

7. Verfahren nach einem der vorhergehenden Ansprüche,
**dadurch gekennzeichnet, dass**
- die Rand-Toleranz-Untergrenze (TUint**R**) für das hintere Ende des Laibes (L1) erst während des Aufschneidens dieses Laibes (L1) abhängig von den Ist-Gewichten (Gist) der bisher von diesem Laib (L1) abgetrennten Scheiben festgelegt wird,
- insbesondere erst während des Aufschneidens der zweiten Hälfte des Laibes (L1) festgelegt wird,
- insbesondere während des Aufschneidens des mittleren Bereiches laufend angepasst wird.
(Für 1. Bedingung, innerhalb **Charge** Durchschnittsgewicht halten:)

8. Verfahren nach einem der vorhergehenden Ansprüche,
bei dem im Durchschnitt über die **Charge** von Laiben (L1 - Lz) das vorgegebene Bezugs-Gewicht (Gbezug) und/oder Nenn-Gewicht (Gnenn) erreicht werden soll,
**dadurch gekennzeichnet, dass**
- das Ist-Gewicht (Gist) jeder abgetrennten Scheibe (S1 bis Sn) der, insbesondere aller, Laibe (L1 bis Lz) der Charge ermittelt wird,
- aus den Ist-Gewichten (Gist) aller bereits hergestellten Scheiben einer **Charge** das Durchschnittsgewicht ermittelt wird und falls dieses unter dem bisherigen Bezugs-Gewicht (Gbezug) und/oder dem Nenn-Gewicht (Gnenn) liegt, für die noch aufzuschneidenden Laibe solche Maßnahmen zum Erhöhen des Durchschnittsgewichtes der noch abzuschneidenden Scheiben getroffen werden, dass das Durchschnittsgewicht aller Scheiben dieser **Charge** das Bezugs-Gewicht (Gbezug) und/oder das Nenn-Gewicht (Gnenn) rechnerisch voraussichtlich mindestens erreichen,
- insbesondere indem das bisherige Bezugs-Gewicht (Gbezug) und/oder die Toleranz-Untergrenze (TUint) für den Rest der **Charge** erhöht wird.
(ausreichende Erhöhung kontrollieren:)

9. Verfahren nach Anspruch 8,
**dadurch gekennzeichnet, dass**
- die Erhöhung des bisherigen Bezugs-Gewichts (Gbezug) und/oder der Toleranz-Untergrenze (TUint) so gewählt wird, dass diese Erhöhung über die Anzahl der noch abzuschneidenden Scheiben dieses Laibes oder dieser Charge das bisher aufgelaufene Fehl-Gewicht ausgleicht oder um mindestens 1 %, besser mindestens 2 %, besser mindestens 3 % übertrifft,
- insbesondere die Überprüfung, ob diese Bedingung rechnerisch voraussichtlich eingehalten wird, während des Abschneidens der restlichen Scheiben mehrfach, insbesondere nach dem Abschneiden jeder weiteren Scheibe, überprüft wird und bei negativem Ergebnis der Überprüfung die Erhöhung des bisherigen Bezugs-Gewichts (Gbezug) und/oder Toleranz-Untergrenze (TUint) so **vergrößert** wird, dass das erforderliche Durchschnittsgewicht der Scheiben über den gesamten Laib oder die gesamte Charge bis zum Ende rechnerisch voraussichtlich erreicht wird.
(Erhöhung nach oben begrenzen:)

10. Verfahren nach Anspruch 8 oder 9,
**dadurch gekennzeichnet, dass**
- die Erhöhung des bisherigen Bezugs-Gewichts (Gbezug) und/oder der bisherigen Toleranz-Untergrenze (TUint) so gewählt wird, dass diese Erhöhung über die Anzahl der noch abzuschneidenden Scheiben das bisher aufgelaufene Fehl-Gewicht übertrifft, jedoch um nicht mehr als 6 %, besser um nicht mehr als 5 %, besser um nicht mehr als 4 %, übertrifft,
- die Überprüfung, ob diese Bedingung rechnerisch voraussichtlich eingehalten wird, während des Abschneidens der restlichen Scheiben mehrfach, insbesondere nach dem Abschneiden jeder weiteren Scheibe, überprüft wird und bei negativem Ergebnis der Überprüfung die Erhöhung des bisherigen Bezugs-Gewichts (Gbezug) und/oder Toleranz-Untergrenze (TUint) so **verringert** wird, dass das erforderliche Durchschnittsgewicht des Laibes oder der Charge bis zum Ende rechnerisch voraussichtlich erreicht wird.
(Korrekturwerte für 1. Laib aus Erfahrungswerten vorgeben:)

11. Verfahren nach einem der vorhergehenden Ansprüche,
**dadurch gekennzeichnet, dass**
vor dem Aufschneiden eines 1. Laibes (L1) einer Charge von Laiben (L1 bis Lz),
- für vorzugebende Dickeneinstellungen (D1 bis Dn) für die einzelnen Scheiben (S1 bis Sn) dieses ersten Laibes (L1) Erfahrungswerte aus ermittelten Dickeneinstellungen vorangegangener Chargen berücksichtigt werden,
- insbesondere die einem gewünschten Bezugs-Gewicht (Gbezug) rechnerisch entsprechende, über den gesamten Laib (L1) gleichmäßige, Dickeneinstellung (D) aller Scheiben für einzelne Scheiben-Nummern (S1 bis Sn) entsprechend der damit bei früheren Chargen erzielten Ist-Gewichte erhöht oder erniedrigt wird.
(Bezugs-Gewicht:)

12. Verfahren nach einem der vorhergehenden Ansprüche,
- wobei das Bezugs-Gewicht (Gbezug) innerhalb eines extern vorgegebenen (definieren) Toleranz-Bereiches (TBext) mit einer Toleranz-Untergrenze (TUext) und ggfs. einer Toleranz-Obergrenze (TOext) liegt,
**dadurch gekennzeichnet, dass**
- als Bezugs-Gewicht (Gbezug) die externe Toleranz-Untergrenze (TUext) des externen Toleranz-Bereiches (TBext) gewählt wird.

13. Verfahren nach einem der vorhergehenden Ansprüche,
**dadurch gekennzeichnet, dass**
- als Bezugs-Gewicht (Gbez) ein Gewicht gewählt wird, welches das Nenn-Gewicht (Gnenn) ist oder bis zu 10 % darüber liegt.
(Laibe mit unterschiedlichen Scheiben-Anzahlen:)

14. Verfahren nach einem der vorhergehenden Ansprüche,
wobei die verpressten Laibe (L1 - Lz) einer Charge eine unterschiedliche Anzahl (n) von maximal erzielbaren Scheiben, die das Bezugs-Gewicht (Gbezug) aufweisen, zulassen,
**dadurch gekennzeichnet, dass**
- die Anzahl der Scheiben, welche der vordere und/oder hintere Randbereich umfasst, festgelegt wird und
- alle anderen Scheiben als mittlerer Bereich behandelt werden.

15. **Aufschneidemaschine (1)** zum Aufschneiden von Laiben (L) in Scheiben (S1 bis Sn) mit einem Ist-Gewicht (Gist) möglichst vieler einzelner Scheiben (S1 bis Sn) auf oder über einem Bezugs-Gewicht (Gbezug) durch Variation der Dickeneinstellungen (D) für die abzuschneidenden Scheiben (S1 bis Sn), umfassend
- eine Haltevorrichtung (2) zum Halten des aufzuschneidenden Laibes (L),
- eine Schneideinheit (6) zum Abtrennen von Scheiben (S1 bis Sn) von dem aufzuschneidenden Laib (L), wobei die Schneideinheit (6) steuerbar ist hinsichtlich der Dickeneinstellung (D) für die das Ist-Gewicht (Gist) der abzutrennende Scheibe (S1 bis Sn) beeinflussenden Parameter,
- eine Waage (16) zum automatischen Wiegen aller abgetrennten Scheiben (S1 bis Sn),
- eine Steuerung (1*), die alle beweglichen Komponenten der Vorrichtung steuert,
**dadurch gekennzeichnet, dass**
die Steuerung (1*) in der Lage ist, das Verfahren gemäß einem der vorhergehenden Ansprüche durchzuführen.
